# EUROPÄISCHE PATENTANMELDUNG

(11) **EP 2 826 607 A1**
(43) Veröffentlichungstag der Anmeldung: **21.01.2015**
(21) Anmeldenummer: 13003554.6
(22) Anmeldetag: 15.07.2013
(51) Int. Cl.: B27B 23/00, B23D 57/00

(54) **Schneidevorrichtung für Holzfaserplatten**

(71) Anmelder: Pavatex SA, 1701 Fribourg (CH)
(72) Erfinder: Mosch, Martin, D-79736 Rickenbach (DE); Brombacher, Volker, CH-5644 Auw (CH)
(74) Vertreter: Grimm, Siegfried

(57) **Zusammenfassung**

Die Erfindung betrifft eine mobile Zerspanvorrichtung (1) für eine Holzfaserplatte (99). Die Zerspanvorrichtung (1) weist neben einer Antriebsvorrichtung (11) ein Sägeschwert (13) als Teil einer Führungsvorrichtung (12) zur Führung eines endlos umlaufenden Sägedrahts (10) auf. Da das Sägeschwert (13) dünner ausgebildet ist als ein Durchmesser des Sägedrahts (10), kann das Sägeschwert (13) in einen Schnittbereich eingeführt werden. Da der Sägedraht (10) als allseitig zerspanender Sägedraht (10) ausgebildet ist, wird die Schnittqualität verbessert.

## Beschreibung

### Gebiet der Erfindung

Die Erfindung betrifft eine Zerspanvorrichtung, insbesondere eine Schneide- oder Trennvorrichtung, für einen Werkstoff wie zum Beispiel eine Holzfaserplatte, eine Verwendung einer solchen Zerspanvorrichtung zum Zerspanen eines solchen Werkstoffs sowie ein Verfahren zum Zerspanen, insbesondere zum Trennen oder Schneiden, eines solchen Werkstoffs mittels einer solchen Zerspanvorrichtung.

### Hintergrund

Im Bauwesen ist die Verwendung von Holzfaserplatten bzw. porösen Faserplatten zu Wärmedämmzwecken bekannt.

Im Moment werden solche Werkstoffe von Verarbeitern, zum Beispiel Zimmerleuten auf einer Gebäude-Baustelle, mit herkömmlichen Zerspanvorrichtungen wie zum Beispiel Handkreissägen oder Kettensägen lokal zerspant, zum Beispiel um diese auf die richtige Grösse zuzuschneiden. Solche herkömmlichen Zerspanvorrichtungen sind jedoch für die Bearbeitung von diesen Werkstoffen nur bedingt geeignet:
(i) Handkreissägen weisen unter anderem den Nachteil auf, dass ein Sägeblattradius der Handkreissäge grösser sein muss als eine Dicke des zuzuschneidenden Werkstoffs. Somit müssen Handkreissägen relativ gross und damit schwer und unhandlich ausgelegt werden, um Werkstoffdicken von zum Beispiel 200 mm oder mehr bearbeiten zu können.
(ii) Kettensägen weisen den Nachteil auf, dass eine erzielbare Schnittqualität oftmals nicht ausreichend ist.

### Darstellung der Erfindung

Daher ist es eine Aufgabe der Erfindung, eine verbesserte Zerspanvorrichtung, eine Verwendung einer solchen sowie ein Verfahren zum verbesserten Zerspanen mittels einer solchen Zerspanvorrichtung bereitzustellen.

Diese Aufgaben werden von der Zerspanvorrichtung, von dem Verfahren zum Zerspanen sowie von der Verwendung einer Zerspanvorrichtung mit den Merkmalen der unabhängigen Patentansprüche gelöst.

Eine erfindungsgemässe Zerspanvorrichtung für einen Werkstoff, insbesondere für eine Holzfaserplatte (oder auch einen Formstein umfassend eine Holzfaserplatte), umfasst demnach einen zumindest abschnittsweise in einer Längsrichtung z ausgebildeten Sägedraht (oder "Schneidedraht") zum lokalen Zerspanen (also z.B. "Zerschneiden" oder "Trennen") des Werkstoffs. Mit anderen Worten ist eine Ausdehnung des Sägedrahts in der Längsrichtung z deutlich (d.h. mindestens 100x) grösser als in Querrichtungen x,y senkrecht zur Längsrichtung (der Sägedraht ist "lang entlang z und dünn in x und y").

Vorzugsweise ist der Sägedraht zumindest abschnittsweise, zum Beispiel in einem Sägebereich (siehe unten) vorgespannt (vorzugsweise in der Längsrichtung z), so dass eine sauberere Zerspanung und somit ein saubererer Schnitt einfacher gewährleistet werden können.

Weiterhin umfasst die Zerspanvorrichtung eine Antriebsvorrichtung zum Bewegen des Sägedrahts in der Längsrichtung z. Diese Bewegung kann in eine Richtung, zum Beispiel +z, oder abwechselnd vor- und zurück (also zum Beispiel entlang ±z) erfolgen. Durch die Bewegung in der Längsrichtung z kann der Werkstoff senkrecht zur Längsrichtung (also in den Querrichtungen x und y) abgetragen oder "zerspant" werden, so dass der Werkstoff in diesen Querrichtungen geschnitten werden kann.

Um ein definierbareres Zerspanen zu ermöglichen, umfasst die Zerspanvorrichtung weiterhin eine Führungsvorrichtung für den Sägedraht, welche dazu ausgestaltet ist, den Sägedraht zumindest abschnittsweise in einer ersten Querrichtung x und in einer zweiten Querrichtung y zu führen, z.B. gegen den Auflagedruck bei Werkstoffkontakt zu stabilisieren. Dabei erstrecken sich - wie oben gesagt - die erste Querrichtung x und die zweite Querrichtung y senkrecht zur Längsrichtung z. Weiterhin stehen die beiden Querrichtungen x, y senkrecht aufeinander. Dabei ist vorzugsweise nicht an jeder Position eine Führung bzw. Stützung in allen Querrichtungen x,y erforderlich. Beispielsweise genügt bei definierter Zerspanungsrichtung (zum Beispiel in -y Richtung) bei einem vorgespannten Sägedraht eine Führung in der ±x-Richtung und in +y-Richtung.

Vorzugsweise kann bei einem vorgespanntem Sägedraht abschnittsweise sogar ganz auf die +y-Führung verzichtet werden.

Erfindungsgemäss umfasst die Führungsvorrichtung weiterhin ein Sägeschwert, welches in einen vom Sägedraht zerspanten Bereich des Werkstoffs einführbar ist. Somit kann das gesamte Sägeschwert in einen "Schnitt" der Zerspanvorrichtung eingeführt werden, so dass maximale Werkstoffabmessungen, welche geschnitten werden sollen, nicht durch einen freien Abstand zwischen Schwert und Sägedraht begrenzt sind, wie es zum Beispiel bei stationären Bandsägen der Fall ist.

Erfindungsgemäss ist der Sägedraht weiterhin so ausgestaltet, dass er eine erste Zerspanwirkung in die erste Querrichtung x und eine zweite Zerspanwirkung in die zweite Querrichtung y aufweist. Mit anderen Worten weist der Sägedraht eine Schnittwirkung in verschiedene Querrichtungen auf und nicht - wie zum Beispiel bei einer Kettensäge - nur in eine Vorzugsrichtung. Damit werden ein leichterer und saubererer Schnitt sowie individuellere Schnittformen ermöglicht.

Die erfindungsgemässe Zerspanvorrichtung hat gegenüber konventionellen Zerspanvorrichtungen den Vorteil einer geringeren Schnittbreite (aufgrund der Verwendung eines Sägedrahts). Somit wird ein Materialverlust verringert. Ein weiterer Vorteil ist eine verminderte Staubentwicklung, insbesondere bei Holzfaserplatten mit einer Rohdichte im Bereich von 50 - 400 kg/m³.

Bevorzugt ist der Sägedraht zumindest abschnittsweise im Wesentlichen (d.h. mit Abweichungen von bis zu ±35% in Abmessungen und/oder Lagen einzelner Sägedrahtelemente) rotationssymmetrisch um die Längsrichtung z ausgebildet. Somit ist eine einfachere Realisierung eines Sägedrahts möglich, welcher eine Schnittwirkung in verschiedene Querrichtungen aufweist.

In einer anderen bevorzugten Ausführungsform ist eine erste Ausdehnung des Sägeschwerts parallel zur ersten Querrichtung x (also eine "Dicke" des Sägeschwerts) zumindest in einem Sägebereich des Sägeschwerts kleiner als eine erste Ausdehnung des Sägedrahts parallel zur ersten Querrichtung x in diesem Sägebereich. Mit anderen Worten ist der Sägedraht "dicker" als das Sägeschwert. Bevorzugte Dicken des Sägedrahts liegen zum Beispiel im Bereich zwischen 1.0 mm und 5 mm, insbesondere zwischen 1.5 mm und 3 mm. Das Sägeschwert ist zumindest in einem Sägebereich dünner als dieser Wert. Somit ist das Sägeschwert leichter in einen vom Sägedraht zerspanten Bereich des Werkstoffs ("Schnitt") einführbar. In einer besonders bevorzugten Ausführungsform ist die erste Ausdehnung des gesamten Sägeschwerts ("Dicke" des Sägeschwerts) kleiner als die erste Ausdehnung des Sägedrahts ("Dicke" des Sägedrahts).

Bevorzugt ist eine kleinste zweite Ausdehnung des Sägeschwerts parallel zur zweiten Querrichtung y grösser als die erste Ausdehnung des Sägeschwerts, insbesondere mehr als 10 x grösser.

Bevorzugt ist eine kleinste dritte Ausdehnung des Sägeschwerts parallel zur Längsrichtung z grösser als die erste Ausdehnung des Sägeschwerts, insbesondere mehr als 50 x grösser.

Besonders bevorzugt ist die kleinste dritte Ausdehnung des Sägeschwerts grösser ist als die kleinste zweite Ausdehnung des Sägeschwerts, wobei die kleinste zweite Ausdehnung grösser ist als die erste Ausdehnung (insbesondere mehr als 10 x grösser) und wobei die kleinste dritte Ausdehnung somit auch grösser ist als die erste Ausdehnung (insbesondere mehr als 50 x grösser).

In einer anderen bevorzugten Ausführungsform weist das Sägeschwert eine erste Ausnehmung auf, insbesondere im Bereich eines Sägebereichs des Sägeschwerts. Somit kann - wie beispielhaft bereits oben erläutert - in bestimmten Abschnitten auf eine Führung bzw. Stützung des Sägedrahts in mindestens einer Querrichtung x und/oder y verzichtet werden bzw. der Sägedraht kann - mit anderen Worten - abschnittsweise sogar "freischwebend" (d.h. führungslos) ausgebildet sein. Somit werden Reibungsverluste minimiert und die Anforderungen an eine Schmierung des Sägedrahts sinken. Weiterhin erleichtert sich eine Zerspanungswirkung "zur Seite", was individuellere Schnittformen ermöglicht.

In einer anderen bevorzugten Ausführungsform ist der Sägedraht als endlos umlaufender Sägedraht (vergleichbar mit einer Sägekette bei einer Kettensäge) ausgestaltet. Dann weist die Führungsvorrichtung eine Umlenkvorrichtung für den Sägedraht auf, welche den Sägedraht umlenkt, vorzugsweise um 180 Grad.

In der Antriebsvorrichtung kann - in einer weiteren bevorzugten Ausführungsform - mindestens eine weitere Umlenkvorrichtung vorgesehen sein, welche mit einem Antriebsritzel kombiniert wird, welcher zum Beispiel mittels einer Fliehkraftkupplung an einen Antriebsmotor der Antriebsvorrichtung gekoppelt ist.

Durch einen endlos umlaufenden Sägedraht ist ein besserer Spanabtransport und eine leichtere Kühlung des Sägedrahts erreichbar, was die Zerspanungswirkung und die Lebensdauer verbessert.

Gemäss eines anderen Aspekts der Erfindung umfasst ein Verfahren zum Zerspanen eines Werkstoffs, insbesondere einer Holzfaserplatte (oder auch eines Formsteins umfassend eine Holzfaserplatte) die folgenden Schritte:
- Bereitstellen einer erfindungsgemässen Zerspanvorrichtung (wie beschrieben) und
- Zerspanen ("Sägen") des Werkstoffs mittels der Zerspanvorrichtung.

Somit kann der Werkstoff leichter und/oder mit verbesserter Schnittqualität bearbeitet/zugeschnitten werden.

Gemäss eines weiteren Aspekts der Erfindung wird eine Zerspanvorrichtung (wie beschrieben) zum Zerspanen ("Sägen") eines Werkstoffs, insbesondere einer Holzfaserplatte (oder auch eines Formsteins umfassend eine Holzfaserplatte) verwendet. Somit kann der Werkstoff leichter und/oder mit verbesserter Schnittqualität bearbeitet/zugeschnitten werden.

### Definitionen:

Der Begriff "Zerspanvorrichtung" umfasst insbesondere eine Trennvorrichtung zum Schneiden des Werkstoffs wie zum Beispiel eine Sägevorrichtung.

Der Begriff "Zerspanen" bezeichnet ein mechanisches Bearbeitungsverfahren für den Werkstoff, bei dem Material des Werkstoffs in Form von Spänen abgetragen wird. Wenn somit von einer "Zerspanwirkung in eine Richtung" gesprochen wird, so bezeichnet dies eine bestimmte "Abtragungswirkung oder -leistung in diese Richtung", z.B. definierbar als "abgetragenes Werkstoffvolumen in diese Richtung pro Zeiteinheit".

Der Begriff "umfassen" kann im Rahmen dieser Beschreibung sowohl "beinhalten" als auch "bestehen aus" bedeuten.

Eine "Holzfaserplatte" (auch "Holzfaserdämmplatte" oder "Holzweichfaserplatte" genannt) bezeichnet eine Platte aus einem an sich bekannten Werkstoff, welcher typischerweise zu 80 - 90 Massen-% aus Holzfasern besteht, welche aus Sägeresten (Schwarte, Spreissel) und Hackschnitzeln gewonnen werden. Holzfaserplatten können nach dem sogenannten Nassverfahren oder nach dem sogenannten Trockenverfahren hergestellt sein. Bevorzugt sind Holzfaserplatten, deren Holzfasern überwiegend oder ausschließlich von Nadelhölzern gewonnen werden. Holzfaserplatten weisen zwei paar Schnittkanten auf ("Kantenflächen") sowie eine Ober- und Unterseite, welche typischerweise nicht unterscheidbar sind ("Seitenflächen" bzw. "Flächen"). Vorteilhaft werden solche Holzfaserplatten verwendet, welche der EN 13171 entsprechen. Die Dimensionen für geeignete Holzfaserplatten können in weiten Bereichen variieren und hängen unter anderem von produktionstechnischen Überlegungen ab. Geeignet sind bspw. Holzfaserplatten mit einer Dicke von 8 - 300 mm. Die Dichten für geeignete Holzfaserplatten können in weiten Bereichen variieren und hängen unter anderem vom angestrebten Verwendungszweck ab. Geeignet sind Holzfaserplatten mit einer Rohdichte von 50 - 400 kg/m³. Solche Holzfaserplatten können nach bekannten Methoden hergestellt werden. Auch können Holzfaserplatten nach an sich bekannten Methoden zu Formsteinen weiterverarbeitet werden (siehe unten).

Eine "Holzwerkstoffplatte" (auch "Wood based panel" genannt) bezeichnet eine an sich bekannte Platte und umfasst Leimholz ("Solid Wood Panels", SWP), Furnierschichtholz (laminated veneer lumber, LVL), Sperrholz, Grobspanplatten (Oriented Standard Board, OSB), Spanplatten ("Particle board", resin bonded or cement bonded), Faserplatten ("Fibre board", bspw. MDF) welche vorzugsweise gemäss EN 13986 für tragende Bauteile freigegeben sind. Holzwerkstoffplatten weisen ebenfalls zwei paar Schnittkanten auf ("Kantenflächen") sowie eine Ober- und Unterseite, welche typischerweise nicht unterscheidbar sind ("Seitenflächen" bzw. "Flächen"). Der Begriff Holzwerkstoffplatte umfasst im Rahmen dieser Beschreibung Holzfaserplatten nicht.

Ein "Formstein" bezeichnet einen dreidimensionalen Körper, welcher zumindest zwei planparallele Flächen (z.B. "Sichtflächen" oder "Lagerflächen") aufweist und so zum Erstellen von Bauelementen, insbesondere eines Mauerverbundes, geeignet ist. Typischerweise ist der Formstein im Wesentlichen quaderförmig. Die neben den Sichtflächen vorliegenden weiteren Seitenflächen werden als "Schmalseiten" bezeichnet; senkrechte Schmalseiten werden als "Stossflächen" und waagerechte Schmalseiten werden als "Lagerflächen" bezeichnet. Ferner kann der Formstein Elemente zur Verbindung mit weiteren Formsteinen ("Verzahnungen") aufweisen. Formsteine werden auch als "Formkörper", "Bausteine" oder allgemeiner als "genormtes Bauelement" bezeichnet. Ein "Formstein" umfasst im Rahmen dieser Beschreibung eine Mehrzahl an Schichten (z.B. drei Schichten) welche mittels Leim miteinander verbunden sind (d.h. verleimt sind). Eine Schicht umfasst dabei eine oder mehrere Holzfaserplatten und/oder Holwerkstoffplatten. Bevorzugt umfasst ein Formstein drei Schichten, wobei die erste Schicht eine oder mehrere Holzfaserplatte(n) umfasst, die zweite Schicht zwei Holzwerkstoffplatten und eine oder mehrere dazwischen liegende Holzfaserplatte(n) und die dritte Schicht eine oder mehrere Holzfaserplatte(n). Die zweite Schicht ist dabei mittig (d.h. zwischen der ersten und der dritten Schicht) angeordnet. Der Formstein ist vorzugsweise im Wesentlichen quaderförmig und hat zum Beispiel ein Kantenverhältnis x:y:z = 4-6:1-5:2-5. Ein Gesamtvolumen kann zum Beispiel 0.005 - 0.2 m³ betragen. Ein derartiger Formstein ist beispielsweise gut geeignet für die Erstellung von Wänden, Mauern und Stützen.

"Leim" bezeichnet an sich bekannte Materialien, welche die oben genannten Platten durch Flächenhaftung und innere Festigkeit, d.h. Adhäsions- und Kohäsionskräfte, verbinden können. Der Begriff umfasst z.B. organische Materialien auf wässriger oder nicht-wässriger Basis; speziell solche Materialien, die bei Temperaturen über 40°C und bei erhöhtem Druck abbinden. Leime im Sinne dieser Beschreibung werden während der industriellen Produktion der genannten Formsteine eingesetzt.

Die Begriffe "Sägedraht" und "Schneidedraht" werden in dieser Beschreibung synonym verwendet.

### Kurze Beschreibung der Zeichnungen

Weitere vorteilhafte Ausgestaltungen der Erfindung ergeben sich aus den abhängigen Ansprüchen und den anhand der Zeichnungen nachfolgend dargestellten Ausführungsbeispielen. Dabei zeigen:
Fig. 1 eine erfindungsgemässe Zerspanvorrichtung 1 gemäss einer ersten Ausführungsform,
Fig. 2a eine erfindungsgemässe Zerspanvorrichtung 1 gemäss einer zweiten Ausführungsform mit zwei Ausnehmungen 51, 52 im Sägeschwert 13,
Fig. 2b eine Draufsicht auf ein Sägeschwert 13 als Teil einer Führungsvorrichtung 12 aus Fig. 2a,
Fig. 3 eine Schnittdarstellung entlang A-A aus Fig. 2, welche Schnittdarstellung den Sägedraht 10 und das Sägeschwert 13 darstellt,
Fig. 4 eine Schnittdarstellung entlang B-B aus Fig. 2, welche Schnittdarstellung den Sägedraht 10, das Sägeschwert 13 und Rollen einer Führungsvorrichtung 12 darstellt,
Fig. 5 die Schnittdarstellung aus Fig. 3 während der Zerspanung eines Werkstoffs 98,
Fig. 6 eine schematische Darstellung des Sägedrahts 10,
Fig. 7 eine erfindungsgemässe Zerspanvorrichtung 1 gemäss einer dritten Ausführungsform mit vier Ausnehmungen 51, 51', 52, 52' im Sägeschwert 13 und
Fig. 8 eine erfindungsgemässe Zerspanvorrichtung 1 gemäss einer vierten Ausführungsform mit einem nicht endlos umlaufenden Sägedraht 10.

In den Figuren bezeichnen gleiche Bezugszeichen gleiche oder gleich wirkende Komponenten.

### Weg(e) zur Ausführung der Erfindung

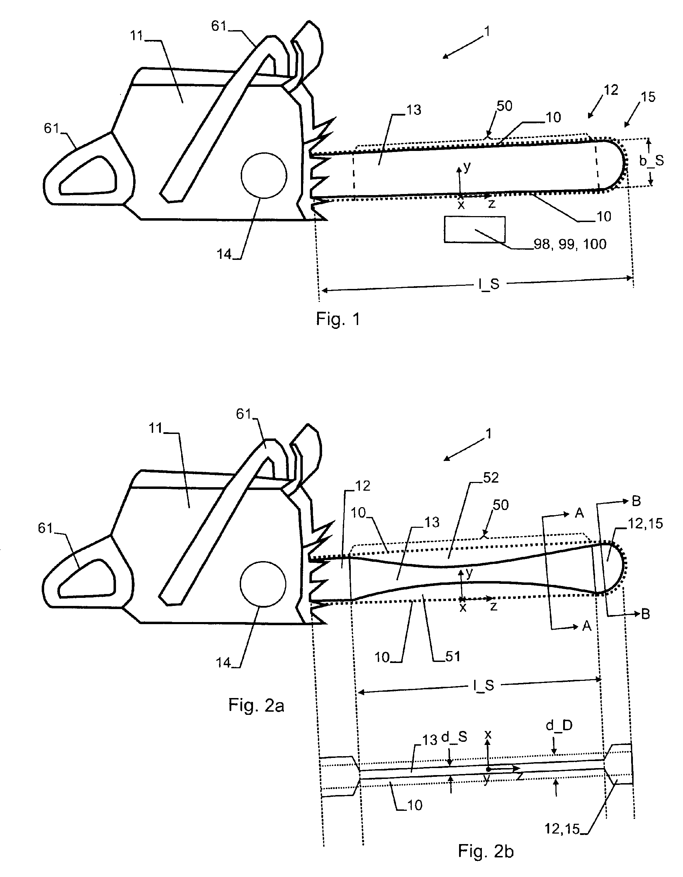

Die Fig. 1 zeigt eine erfindungsgemässe mobile Zerspanvorrichtung 1 für einen Werkstoff 98, zum Beispiel eine Holzfaserplatte 99 (oder auch einen Formstein 100 umfassend eine Holzfaserplatte 99) gemäss einer ersten Ausführungsform. Die mobile Zerspanvorrichtung 1 umfasst dabei eine Antriebsvorrichtung 11 in einem Gehäuse, mit welcher Führungsgriffe 61 verbunden sind. Die äußere Gehäuseform und die Führungsgriffe 61 sind ähnlich zu einer bekannten Kettensäge ausgeführt, so dass ein sichererer beidhändiger Betrieb durch einen Anwender ermöglicht wird. Im Gegensatz zu einer Kettensäge wird jedoch keine Sägekette mit einer Vorzugs-Zerspanrichtung (z.B. entlang ±y) verwendet, sondern es wird ein im Wesentlichen um die z-Richtung rotationssymmetrischer vorgespannter Sägedraht 10 eingesetzt, welcher eine (im Wesentlichen gleiche, d.h. ±35%) Zerspanwirkung in eine erste radiale Querrichtung x (in die Blattebene hinein bzw. aus der Blattebenen heraus) und in eine zweite radiale Querrichtung y (nach oben bzw. unten bei normaler Betrachtung der Figur) aufweist. Durch eine solche Ausgestaltung des Sägedrahts 10 ist eine erste Biegesteifigkeit des Sägedrahts 10 in der ersten Querrichtung x (in die Blattebenen hinein) gleich einer zweiten Biegesteifigkeit des Sägedrahts 10 in der zweiten Querrichtung y (nach oben). Durch die Zerspanwirkungen in mehrere Querrichtungen ±x und ±y wird ein saubererer Werkstoff-Schnitt gewährleistet.

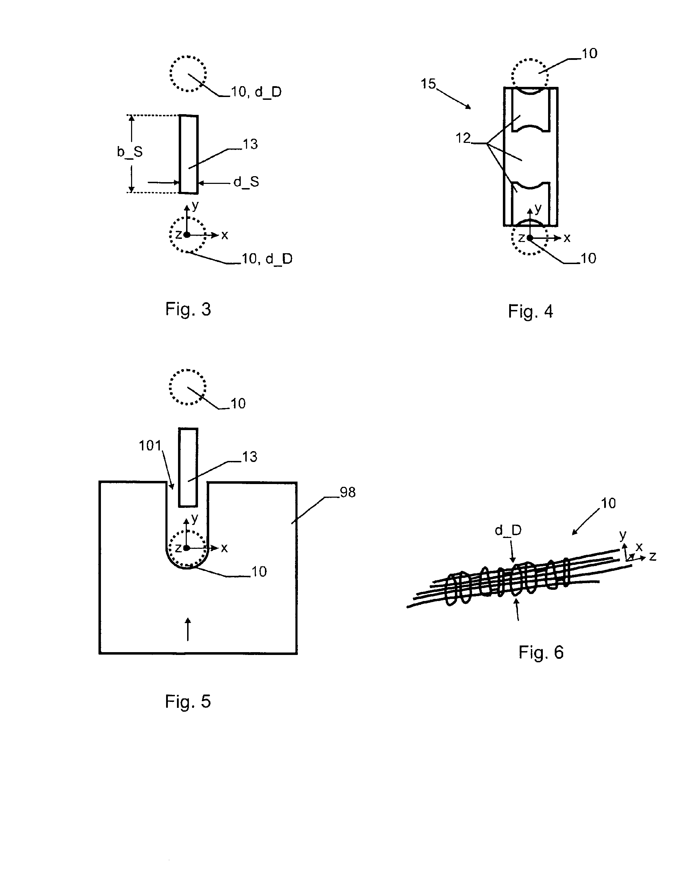

Durch die Antriebsvorrichtung 11 kann der Sägedraht 10, welcher als endlos umlaufender Sägedraht 10 ausgeführt ist, in seiner Längsrichtung z bewegt werden, so dass die Zerspanwirkung des Sägedrahts in die erste und die zweite Querrichtung x, y auftritt. Es sei an dieser Stelle darauf hingewiesen, dass die Längsrichtung z des Sägedrahts an einer Ober- bzw. Unterseite eines länglich entlang der Längsrichtung z geformten Sägeschwerts 13 definiert wird (d.h. an den langen Seiten eines Sägebereichs 50 des Sägeschwerts 13, siehe das durch die gestrichelte Linien begrenzte Rechteck in Fig. 1) und nicht an dessen vorderem Ende, an welchem der Sägedraht 10 umgelenkt wird. Eine Führungsvorrichtung 12 für den Sägedraht 10 umfasst neben dem Sägeschwert 13 zwei Umlenkvorrichtungen 14,15, welche den Sägedraht 10 um jeweils 180 Grad umlenken. Die hintere Umlenkvorrichtung 14 ist mit der Antriebsvorrichtung 11 gekoppelt und überträgt die Kraft eines Motors der Antriebsvorrichtung 11 auf den Sägedraht 10 zu dessen Bewegung in die Längsrichtung z. Das Sägeschwert 13 ist als dünnes (d.h. dünner als eine Dicke d_D des Sägedrahts) Sägeschwert 13 ausgebildet, welches sich im Wesentlichen (d.h. bis auf seine Dicke d_S, siehe unten) in einer durch die Längsrichtung z und durch die zweite Querrichtung y aufgespannten Ebene erstreckt. Die Maße l_S und b_S in dieser Ebene betragen 30 cm bzw. 8 cm. Das Sägeschwert 13 als Teil der Führungsvorrichtung 12 steht über die Antriebsvorrichtung 11 vor. Die Dicke d_S = 1.5 mm des gesamten Sägeschwerts 13 ist über das gesamte Sägeschwert 13 dünner als eine Dicke d_D = 2 mm des Sägedrahts (siehe auch Figur 3). Somit kann das Sägeschwert in einen vom Sägedraht zerspanten Bereich ("Schnitt") des Werkstoffs eingeführt werden. Ein Gewicht der Zerspanvorrichtung 1 beträgt ca. 14 kg. Somit ist ein mobiler Betrieb, zum Beispiel auf Gebäude-Baustellen erleichtert.

Die Fig. 2a zeigt eine erfindungsgemässe Zerspanvorrichtung 1 gemäss einer zweiten Ausführungsform. Die zweite Ausführungsform entspricht der in der Figur 1 beschriebenen Ausführungsform der Erfindung mit der Ausnahme, dass das Sägeschwert 13 zwei konkave Ausnehmungen 51, 52 in einem Sägebereich 50 aufweist. Die Ausnehmungen 51,52 sind an gegenüberliegenden Seiten des Sägeschwerts 13 in der zweiten Querrichtung y angeordnet. Somit ergeben sich zwei Bereiche im Bereich der Ausnehmungen 51,52, in denen der Sägedraht 10 freischwebend ist, d.h. er wird in diesen Bereichen nicht durch einen Teil der Führungsvorrichtung 12 geführt (siehe Fig. 3, welche eine Schnittdarstellung entlang A-A aus Fig. 2a zeigt). Somit werden in diesen Bereichen Reibungsverluste minimiert und die Anforderungen an eine Schmierung des Sägedrahts sinken. Weiterhin erleichtert sich eine Zerspanungswirkung "zur Seite", d.h. in diesem Fall entlang ±x, was individuellere Schnittformen ermöglicht.

In der zweiten Ausführungsform erstreckt sich das "dünne" (d.h. d_S<d_D) Sägeschwert 13 in Längsrichtung z nicht über die ganze vorstehende Länge, sondern nur ein Bereich mit der Länge l_S wird durch das Sägeschwert 13 gebildet (siehe durchgezogene vertikale Linien in der Figur 2). Angrenzend an das "dünne" Sägeschwert 13 sind "dickere" (d.h. dicker als die erste Ausdehnung des Sägedrahts d_D) Teile der Führungsvorrichtung 12 vorgesehen, welche im vorderen Teil (also dem der Antriebsvorrichtung abgewandten Teil) als Teil der Umlenkvorrichtung 15 fungieren (siehe Figur 2b sowie auch Figur 4, welche eine Schnittdarstellung entlang B-B aus Fig. 2a zeigt).

Die Fig. 5 zeigt die Schnittdarstellung aus Fig. 3 während der Zerspanung eines Werkstoffs 98. Aufgrund der geringeren Dicke d_S des Sägeschwerts 13 im Vergleich zum Sägedraht 10 kann das Sägeschwert 13 in einen vom Sägedraht 10 zerspanten Bereich 101 des Werkstoffs 98,99 eingeführt werden. Aufgrund der bereichsweise freischwebenden, d.h. ungeführten Ausgestaltung des Sägedrahts 10 ergibt sich weiterhin eine Erleichterung einer Zerspanungswirkung "zur Seite", d.h. in diesem Fall entlang ±x, was individuellere Schnittformen ermöglicht.

Die Fig. 6 zeigt eine schematische Darstellung des in der ersten und zweiten Ausführungsform verwendeten um die Längsrichtung z rotationssymmetrischen Sägedrahts 10. Dabei ist der Begriff "rotationssymmetrisch" als "im Wesentlich rotationssymmetrisch" zu verstehen, d.h. Abweichungen von ±35% in Abmessungen und/oder Lagen einzelner Sägedrahtelemente sollen noch unter den Begriff "rotationssymmetrisch" fallen. Der Sägedraht 10 besteht aus einer Mehrzahl von in der Längsrichtung z verlaufenden Einzeldrähten, welche durch um diese kreisförmig oder helixartig angeordnete Sägedrahtschlaufen zusammengehalten werden. Ein solcher Sägedraht 10 ist zum Beispiel unter der Bezeichung "Schneiddraht Nr. 415" des Herstellers "Bäumer" kommerziell erhältlich.

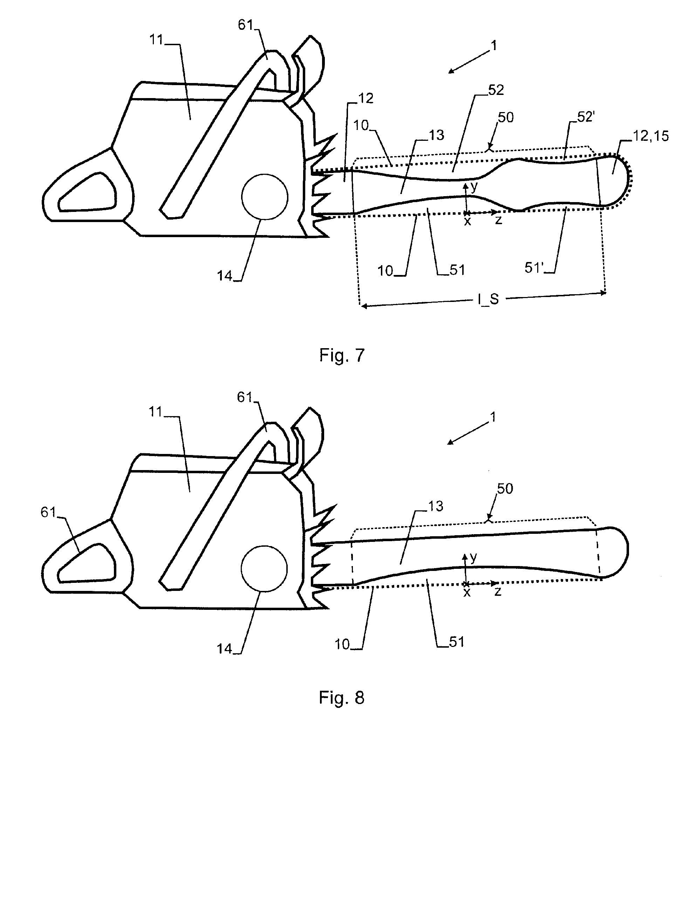

Die Fig. 7 zeigt eine erfindungsgemässe Zerspanvorrichtung 1 gemäss einer dritten Ausführungsform. Die dritte Ausführungsform entspricht der in der Figur 2a beschriebenen zweiten Ausführungsform mit der Ausnahme, dass in der dritten Ausführungsform vier Ausnehmungen 51, 51', 52, 52' im Sägeschwert 13 vorgesehen sind. Durch eine geeignete Anzahl und Anordnung der Ausnehmungen in Kombination mit der Vorspannung kann der richtige "Kompromiss" zwischen "ausreichender Führung" des Sägedrahts 10 und dessen "Freiheit", d.h. freischwebenden Bereichen eingestellt werden, was die Schnittergebnisse und die Haltbarkeit der verwendeten Komponenten verbessert.

Die Fig. 8 zeigt eine erfindungsgemässe Zerspanvorrichtung 1 gemäss einer vierten Ausführungsform. Als Unterschied zu den bisher beschriebenen Ausführungsformen weist die vierte Ausführungsform nur eine Ausnehmung 51 an der Unterseite des Sägeschwerts 13 auf (bei normaler Betrachtung der Figur). Weiterhin ist der Sägedraht 10 in der vierten Ausführungsform nicht als endlos umlaufender Sägedraht 10 ausgebildet, sondern als ein von der Antriebsvorrichtung 11 hin- und herbewegter (also abwechselnd entlang ± der Längsrichtung z) Sägedraht 10. Somit wird die technische Konstruktion vereinfacht, es kann allerdings nicht in die +y-Richtung geschnitten werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Zerspanvorrichtung (1) für einen Werkstoff (98), insbesondere für eine Holzfaserplatte (99), die Zerspanvorrichtung (1) umfassend
- einen zumindest abschnittsweise in einer Längsrichtung (z) ausgebildeten Sägedraht (10) zum Zerspanen des Werkstoffs (98),
- eine Antriebsvorrichtung (11) zum Bewegen des Sägedrahts (10) in der Längsrichtung (z) und
- eine Führungsvorrichtung (12) für den Sägedraht (10), welche dazu ausgestaltet ist, den Sägedraht (10) zumindest abschnittsweise in einer ersten Querrichtung (x) und in einer zweiten Querrichtung (y) zu führen, wobei die erste und die zweite Querrichtung (x,y) senkrecht aufeinander und senkrecht auf der Längsrichtung (z) stehen,
**dadurch gekennzeichnet, dass** die Führungsvorrichtung (12) ein Sägeschwert (13) umfasst, welches in einen vom Sägedraht (10) zerspanten Bereich (101) des Werkstoffs (98) einführbar ist und
dass der Sägedraht (10) so ausgestaltet ist, dass er eine erste Zerspanwirkung in die erste Querrichtung (x) und eine zweite Zerspanwirkung in die zweite Querrichtung (y) aufweist.

2. Zerspanvorrichtung (1) nach Anspruch 1, wobei der Sägedraht (10) zumindest abschnittsweise im Wesentlichen rotationssymmetrisch um die Längsrichtung (z) ausgebildet ist.

3. Zerspanvorrichtung (1) nach einem der vorangehenden Ansprüche, wobei die erste Zerspanwirkung des Sägedrahts (10) in die erste Querrichtung (x) und die zweite Zerspanwirkung des Sägedrahts (10) in die zweite Querrichtung (y) zumindest abschnittsweise gleich sind.

4. Zerspanvorrichtung (1) nach einem der vorangehenden Ansprüche, wobei eine erste Biegesteifigkeit des Sägedrahts (10) in der ersten Querrichtung (x) zumindest abschnittsweise gleich einer zweiten Biegesteifigkeit des Sägedrahts (10) in der zweiten Querrichtung (y) ist.

5. Zerspanvorrichtung (1) nach einem der vorangehenden Ansprüche, wobei eine erste Ausdehnung (d_S) des Sägeschwerts (13) parallel zur ersten Querrichtung (x) zumindest in einem Sägebereich (50) des Sägeschwerts (13) kleiner ist als eine erste Ausdehnung (d_D) des Sägedrahts (10) parallel zur ersten Querrichtung (x) in diesem Sägebereich (50) und insbesondere wobei die erste Ausdehnung (d_S) des gesamten Sägeschwerts (13) kleiner ist als die erste Ausdehnung (d_D) des Sägedrahts (10).

6. Zerspanvorrichtung (1) nach einem der vorangehenden Ansprüche, wobei das Sägeschwert (13) eine erste Ausnehmung (51) aufweist und insbesondere wobei die erste Ausnehmung (51) im Bereich eines Sägebereichs (50) des Sägeschwerts (13) angeordnet ist.

7. Zerspanvorrichtung (1) nach Anspruch 6, wobei das Sägeschwert (13) zusätzlich eine zweite Ausnehmung (52) aufweist und insbesondere wobei die zweite Ausnehmung (52) im Bereich des Sägebereichs (50) des Sägeschwerts angeordnet ist.

8. Zerspanvorrichtung (1) nach Anspruch 7, wobei die erste Ausnehmung (51) und die zweite Ausnehmung (52) an einander gegenüberliegenden Seiten des Sägeschwerts (13) angeordnet sind, insbesondere an gegenüberliegenden Seiten in der zweiten Querrichtung (y).

9. Zerspanvorrichtung (1) nach einem der Ansprüche 6 bis 8, wobei der Sägedraht (10) mindestens im Bereich der ersten Ausnehmung (51) freischwebend ausgebildet ist.

10. Zerspanvorrichtung (1) nach einem der vorangehenden Ansprüche, wobei der Sägedraht (10) als endlos umlaufender Sägedraht (10) ausgestaltet ist und wobei die Führungsvorrichtung (12) eine Umlenkvorrichtung (15) für den Sägedraht (10) aufweist.

11. Zerspanvorrichtung (1) nach einem der vorangehenden Ansprüche, wobei das Sägeschwert (13) als dünnes Sägeschwert im Wesentlichen in einer durch die Längsrichtung (z) und durch die zweite Querrichtung (y) aufgespannten Ebene ausgestaltet ist.

12. Zerspanvorrichtung (1) nach einem der vorangehenden Ansprüche,
wobei die Zerspanvorrichtung als mobile Zerspanvorrichtung (1) mit mindestens einem, insbesondere zwei, mit der Antriebsvorrichtung (11) verbundenen Führungsgriff (61) ausgestaltet ist,
wobei die Führungsvorrichtung (12) mit dem Sägeschwert (13) in der Längsrichtung (z) zumindest teilweise über die Antriebsvorrichtung (11) vorsteht,
und insbesondere wobei die Zerspanvorrichtung (1) ein Gewicht kleiner als 25 kg aufweist, insbesondere kleiner als 15 kg.

13. Verfahren zum Zerspanen eines Werkstoffs (98), insbesondere einer Holzfaserplatte (99), das Verfahren umfassend die folgenden Schritte:
- Bereitstellen einer Zerspanvorrichtung (1) nach einem der vorangehenden Ansprüche und
- Zerspanen des Werkstoffs (98) mittels der Zerspanvorrichtung (1).

14. Verwendung einer Zerspanvorrichtung (1) nach einem der Ansprüche 1 bis 12 zum Zerspanen eines Werkstoffs (98), insbesondere einer Holzfaserplatte (99).
